**Europäisches Patentamt**

**European Patent Office**

**Office européen des brevets**

(11) Veröffentlichungsnummer: **0 006 826**
**B1**

## EUROPÄISCHE PATENTSCHRIFT

(45) Veröffentlichungstag der Patentschrift:
**14.07.82**

(21) Anmeldenummer: **79810051.7**

(22) Anmeldetag: **19.06.79**

(51) Int. Cl.³: **B 03 C 7/06, H 01 B 15/00**

(54) Verfahren und Anordnung zum Aussortieren von elektrisch isolierendem Material.

(30) Priorität: **19.06.78 CH 6653/78**

(43) Veröffentlichungstag der Anmeldung:
**09.01.80 Patentblatt 80/1**

(45) Bekanntmachung des Hinweises auf die Patenterteilung:
**14.07.82 Patentblatt 82/28**

(84) Benannte Vertragsstaaten:
**AT BE CH DE FR GB IT LU NL SE**

(56) Entgegenhaltungen:
**FR-A-1 418 445**
**FR-A-2 117 735**
**US-A-3 970 546**
**MINE AND QUARRY, Vol. 3, Nr. 11, November 1974, London, GB, T. G. HAWKER: »Magnetic and electrostatic techniques«, Seiten 39—45**

(73) Patentinhaber: **Heinz Senn AG, Bernstrasse 9, CH-4665 Oftringen (CH)**

(72) Erfinder: **Senn, Heinz, Muttenrain 99, CH-5037 Muhen (CH)**
Erfinder: **Strässler, Walter, Kirchacker, CH-3364 Seeberg (CH)**
Erfinder: **Hubler, Jörg, Zürichstrasse 2, CH-4665 Oftringen (CH)**
Erfinder: **Lüthi, Erwin, Bonigerweg 5, CH-4852 Rothrist (CH)**

(74) Vertreter: **Schmid, Rudolf et al, c/o ISLER & SCHMID Patentanwaltsbureau Walchestrasse 23, CH-8006 Zürich (CH)**

# Verfahren und Anordnung zum Aussortieren von elektrisch isolierendem Material

Die vorliegende Erfindung betrifft ein Verfahren und eine Einrichtung zum Aussortieren von elektrisch isolierendem Material aus einer feingekörnten Mischung von elektrisch leitendem und elektrisch isolierendem Material.

Beim Verdrahten elektrischer Anlageteile oder beim Ziehen von elektrischen Leitungen in Gebäuden entsteht Abfall von isolierten elektrischen Leitern. In geringen Mengen konnte früher das Metall durch Verbrennen der Isolation von einem in einem Haufen wirr zusammengefaßten Abfallstücken zurückgewonnen werden. Im Laufe der Zeit wurde diese Verbrennung, wenn nicht gerade verboten, so erregte sie doch den Unwillen der Bevölkerung. Es wurde deshalb schon seit längerem versucht, das Metall auf andere Weise zurückzugewinnen.

Aus der FR-A 1 418 445 (CARPCO) sind ein Verfahren und eine Vorrichtung zur elektrostatischen Trennung von Partikeln aus elektrisch leitendem und elektrisch nichtleitendem Material bekannt. Das beim oberen Kulminationspunkt einer rotierenden Trommel aus leitendem Material aufgebrachte Gemisch wird mit einer Elektrodenanordnung elektrisch geladen, wobei feingranuliertes Material zuerst abgeworfen wird und reines, elektrisch nichtleitendes Material erst mit elektrischer Neutralisation durch ein Wechselfeld von der Trommel abfällt. Zwischen diesen beiden Extremen liegt ein Gebiet unterhalb der Trommel, in dem ein Gemisch aus leitendem und nichtleitendem Material von der Trommelwand abfällt. Mit dieser Anordnung ergibt sich keine saubere Trennung von wiederverwendbarem elektrisch isolierendem Material und elektrisch leitendem Material, sondern nur von grobkörnigem und feinpulverigem, elektrisch isolierendem Material.

Es zeigt sich immer wieder, daß bei allen bekannten Trennverfahren, auch bei Windsichtern, jeweils wohl die Metallpartikeln praktisch rein, aber das übrige Material, wie Polyvinylchlorid oder dgl., noch mit einigen Gewichtsprozenten Metall verunreinigt ist, so daß der Kunststoff nicht mehr zu gebrauchen ist und vernichtet werden müßte.

Der Erfindung liegt nun die Aufgabe zugrunde, eine Möglichkeit zu schaffen, mit der der mit elektrisch leitendem Material verunreinigte Kunststoff derart rein erhalten werden kann, daß eine Wiederverwendung möglich ist.

Erfindungsgemäß wird dies mit einem Verfahren und mit einer Einrichtung gemäß den Definitionen in den Patentansprüchen erreicht.

Nachfolgend wird die Erfindung anhand eines Ausführungsbeispiels gemäß der Zeichnung näher erläutert. Dabei zeigt

Fig. 1 schematisch eine vollständige Anlage zum Trennen von Kupfer und Isoliermaterial und

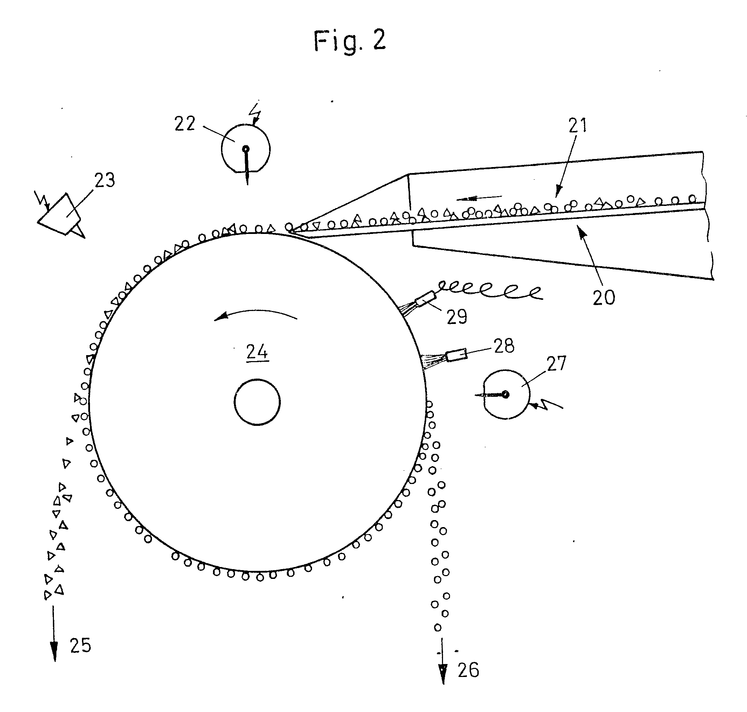

Fig. 2 schematisch den Teil der Anlage, der zum Aussortieren von praktisch reinem Isoliermaterial dient.

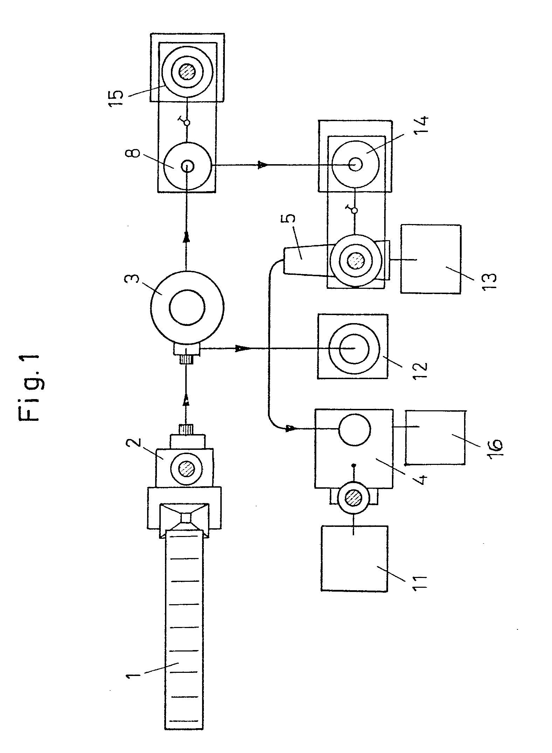

Im Schema Fig. 1 lassen sich die folgenden einzelnen Maschinen identifizieren: ein Förderband 1, mit dem das Rohmaterial einer Schneidemühle 2 zugeleitet wird. Das in Granulat von 1 – 3 mm Länge zerkleinerte Material wird einem Entstauber 3 zugeführt. Der Staub kommt in einen Staubabscheider 12, und das staubfreie Granulat wird einem ersten Windsichter 8 mit einem Abscheider 15 für feinkörniges Kunststoffmaterial zugeführt, das Metall und das grobkörnige Kunststoffmaterial werden nach dieser ersten Trennstufe einem zweiten Windsichter 14 mit einem Feinkupfer- und Kunststoffabscheider 5 zugeführt. Vom zweiten Windsichter 14 wird Grobkupfer in praktisch reiner Form in einen Behälter 13 abgegeben. Bisher mußte das mit dem Feinkupfer- und Kunststoffabscheider 5 erhaltene Material weggeworfen werden, da es für die Wiederverwendung des Kunststoffes auch bei einer Reinheit von 97 – 99% zu wenig rein ist und für die Gewinnung der restlichen 1 – 3% Kupfer lohnte sich der Aufwand nicht. Somit mußte man sich mit dem im Abscheider 15 erhaltenen feinkörnigen Kunststoff und dem im Behälter 13 anfallenden grobkörnigen Kupfer zufriedengeben. Jedoch die vergleichsweise großen Mengen an feinem Kupfer und grobem Kunststoff mußten unbenützt auf Halden gesammelt werden.

Gemäß der Erfindung schließt nun noch eine weitere Maschineneinheit an den Abscheider 5 an, nämlich eine Anordnung 4 zum Abscheiden von grobkörnigem Kunststoff, ein Auffangbehälter 11 für diesen Kunststoff und ein Behälter 16 für das feinteilige Kupfer.

Als nähere Umschreibung der bisher erläuterten Maschinen kann als Entstauber 3 ein Zyklon mit einem Gebläse vorgesehen sein, mit dem der Staub in den Staubabscheider 12 befördert wird. Die beiden Windsichter 8 und 14 sind für Materialien, die sich im Gewicht unterscheiden, ausgelegt. Diese Maschinen sind jedem Fachmann geläufig.

Gemäß der Erfindung besteht nun die Möglichkeit, das bisherige Abfallmaterial nochmals in einen Kupferanteil und in einen Kunststoffanteil zu scheiden.

Eine horizontal angeordnete Metalltrommel 24 wird mittels einer Transportanlage 20, z. B. ein Förderband oder ein Rütteltisch, mit dem gekörnten Material 21 nahe bei der Kulminationsmantellinie beschickt. Mit einer Elektrode 22, die parallel zu einer Mantellinie der Metalltrommel 24 verläuft, wird ein Wechselspannungsfeld abgestrahlt, wodurch das darunter bewegte Material elektrisch entladen wird. Parallel zu dieser Elektrode 22 und auf dem Trommelumfang um einen Winkel, der kleiner als 90° ist, verschoben, ist eine weitere Elektrode 23 für ein hochgespanntes Gleichspannungsfeld angeordnet. Durch dieses Feld werden die Partikel elektrisch geladen, wobei die elektrisch leitenden und in einem geringen Prozentsatz vorhandenen Kupferpartikeln die Ladung an die Trommel abgeben und die in einem hohen Prozentsatz vorhandenen, elektrisch isolierenden Partikel werden damit statisch aufgeladen und bleiben an der Trommelwand kleben.

Wird nun die Trommel 24 um die Achse in Richtung des Pfeiles rotiert, so werden die ungeladenen Kupferteile, die dreieckig dargestellt sind, zum Teil durch Zentrifugalkraft und zum Teil durch Schwerkraft abgeworfen und können als praktisch 100% reines Kupfer 25 aufgefangen werden. Infolge der statischen Ladung bleiben die elektrisch isolierenden Partikel, die rund dargestellt sind, an der Trommel kleben. An einer Stelle, die praktischerweise möglichst weit von der Stelle, bei der das Kupfer abfällt, entfernt ist, ist eine weitere Elektrode 27 vorgesehen, mit der wieder ein Wechselspannungsfeld zur Entladung der Partikel aufgebaut wird. Die damit entladenen Kunststoffkörner 26 können in einer Reinheit bis zu 0,001‰ aufgefangen werden.

Nachfolgend an diese elektrische Entladung ist noch eine mechanische Abstreifbürste 28 und eine elektrische Bürste 29 als Erdverbindung vorgesehen.

Anstelle von Wechselspannungsfeldern mit den Elektroden 22 und 27 kann beispielsweise mit der Elektrode 27 ein negatives Spannungsfeld erzeugt werden, wenn mit der Elektrode 23 ein positives Spannungsfeld erzeugt wurde oder umgekehrt, und ebenso wäre auch denkbar, daß mit der Elektrode 22 ein zum Feld, das mit der Elektrode 23 erzeugt wird, umgekehrt gepoltes Feld angelegt werden kann.

Es hat sich gezeigt, daß die Reinheit der Kunststoffkörner von der Drehgeschwindigkeit und vom Durchmesser der Trommel abhängt, und umgekehrt gilt aber auch, daß die Reinheit bei gleichem Trommeldurchmesser und bei gleicher Drehzahl stark von der Größe der beiden Partikel-Sorten abhängt. Somit muß vorgesehen sein, daß die Drehzahl der Trommel einstellbar ist, und wenigstens einmal, bei der Inbetriebnahme, eingestellt werden muß, damit dieser Maschinenteil an die Wirkungsweise der Vorsortiermaschinen angepaßt werden kann.

## Patentansprüche

1. Verfahren zum Aussortieren von elektrischem Isolationsmaterial aus einer feingekörnten Mischung von zerkleinertem, elektrisch leitendem und elektrisch nichtleitendem Material durch Aufbringen der Mischung auf die Mantelfläche einer elektrisch leitenden zylindrischen Trommel, die um ihre horizontal angeordnete Zylinderachse rotiert wird, Aufladen der Partikeln mit einem elektrischen Feld, derart, daß die elektrisch leitenden Partikeln durch die Zentrifugalkraft abgeworfen werden und die elektrisch isolierenden Partikeln weitertransportiert werden, um schließlich die Partikeln aus elektrischem Isolationsmaterial von der Trommelwand abzunehmen und aufzufangen, dadurch gekennzeichnet, daß die Partikeln nach dem Aufbringen auf die Mantelfläche und vor dem Aufladen durch das elektrische Feld elektrisch neutralisiert werden.

2. Verfahren nach Patentanspruch 1, dadurch gekennzeichnet, daß die Partikeln aus Isolationsmaterial zum Abnehmen von der Mantelfläche erneut elektrisch neutralisiert werden.

3. Anordnung zur Durchführung des Verfahrens nach Patentanspruch 1, mit einer zylindrischen Trommel (24) mit praktisch horizontal angeordneter Zylinderachse und mit einer elektrisch leitenden Mantelfläche, die von einer Transportvorrichtung (20) wenigstens annähernd beim oberen Kulminationspunkt der Trommel beschickbar ist, dadurch gekennzeichnet, daß auf dem Umfang der Mantelfläche vor einer um 90° vom höchsten Gebiet in Drehrichtung entfernten Stelle eine Elektrode (23) zur elektrischen Aufladung der Partikeln aus Isolationsmaterial parallel zu einer Mantellinie verlaufend angeordnet ist, und eine zweite Elektrode (27) zur elektrischen Entladung der genannten Partikeln bei einer um 90° vom höchsten Gebiet entgegen der Drehrichtung entfernten Stelle ebenfalls parallel zu einer Mantellinie verlaufend angeordnet ist und daß nahe bei der Beschickungsstelle auf der Trommel eine dritte Elektrode (22) zur elektrischen Entladung der Mischung parallel zu einer Mantellinie verlaufend angeordnet ist.

4. Anordnung nach Patentanspruch 3, dadurch gekennzeichnet, daß zwischen der zweiten Elektrode (27) und der Abgabestelle des Transportbandes (20) eine Erdungselektrode (29) auf dem Mantel der Trommel (24) angeordnet ist, um die Mantelfläche vor der Beschickungsstelle zu neutralisieren.

5. Anordnung nach Patentanspruch 4, dadurch gekennzeichnet, daß zwischen der zweiten Elektrode (27) und der Erdungselektrode (29) eine Abstreifvorrichtung (28) für das Abstreifen von an der Mantelfläche klebenden Partikeln aus Isolationsmaterial vorhanden ist.

## Claims

1. Method for sorting electrically insulating material from a fine-grained mixture of comminuted, electrically conducting and electrically non-conducting material by applying the mixture to the surface of an electrically conducting cylindrical drum rotating about its horizontally aligned cylinder axis, charging the particles with an electric field in such a way that the electrically conducting particles are discarded by the centrifugal force and the electrically insulating particles are transported further, so that finally the particles of electrically insulating material are removed from the drum wall and collected, characterised in that the particles are electrically neutralised after being applied to the drum surface and before being charged by the electric field.

2. Method according to Claim 1, characterised in that the particles of insulating material are electrically reneutralised on removal from the drum surface.

3. Arrangement for carrying out the method according to Claim 1, comprising a cylindrical drum (24) with a practically horizontally arranged cylinder axis and an electrically conducting surface which can be charged (loaded) from a transporting device (20) at least roughly in the upper culmination point of the drum, characterised in that an electrode (23) for electrically charging the particles of insulating material is arranged off-centre parallel to a generating line, on the circumference of the drum surface in front of a position displaced by 90° in the rotation direction from the highest region, and a second electrode (27) for electrically discharging the said particles is likewise arranged off-centre parallel to a generating line, at a position displaced by 90° from the highest region in the counter-rotation direction, and that in the vicinity of the charging (unloading) point on the drum a third electrode (22) for electrically discharging the mixture is arranged off-centre parallel to a generating line.

4. Arrangement according to Claim 3, characterised in that an earthing electrode (29) is arranged on the cylindrical surface of the drum (24) between the second electrode (27) and the discharge (unloading) point of the transporting belt (20), in order to neutralise the drum surface in front of the charging (unloading) point.

5. Arrangement according to Claim 4, characterised in that a stripper (28) for stripping off particles adhering to the drum surface is provided between the second electrode (27) and the earthing electrode (29).

**Revendications**

1. Procédé pour la séparation de matériau d'isolation électrique en partant d'un mélange finement granulé de matériau broyé conducteur de l'électricité et non conducteur de l'électricité, par application du mélange sur la surface de l'enveloppe d'un tambour cylindrique conducteur de l'électricité, qui est entraîné en rotation autour de son axe de cylindre disposé horizontalement, puis en affectant les particules d'une charge au moyen d'un champ électrique, de telle sorte que les particules conductrices de l'électricité sont rejetées par la force centrifuge et que le transport des particules électriquement isolantes est poursuivi, pour retirer finalement de la paroi du tambour les particules de matériau d'isolation électrique et les recueillir, lequel procédé est caractérisé par le fait que l'on neutralise électriquement les particules après les avoir appliquées sur la surface d'enveloppe et avant de les charger à l'aide du champ électrique.

2. Procédé selon la Revendication 1, caractérisé par le fait que l'on neutralise à nouveau électriquement les particules de matériau d'isolation pour les retirer de la surface d'enveloppe.

3. Agencement pour la mise en oeuvre du procédé selon la Revendication 1, comprenant un tambour cylindrique (24) dont l'axe de cylindre est disposé pratiquement horizontalement, et une surface d'enveloppe conductrice de l'électricité qui peut être alimentée par un transporteur (20) au moins à proximité du point culminant supérieur du tambour, lequel appareil est caractérisé par le fait qu'une électrode (23) destinée à charger électriquement les particules de matériau isolant, est disposée parallèlement à une génératrice de l'enveloppe, sur la périphérie de la surface de cette dernière, en avant d'un emplacement éloigné de 90° de la zone culminante, dans le sens de rotation, et qu'une deuxième électrode (27) destinée à décharger électriquement les particules susdites, est disposée également parallèlement à une génératrice, à proximité d'un emplacement éloigné de 90° de la zone la plus haute, dans le sens contraire au sens de rotation, et par le fait qu'une troisième électrode (22) destinée à décharger électriquement le mélange est disposée parallèlement à une génératrice, à proximité de l'emplacement d'alimentation prévu sur le tambour.

4. Agencement selon la Revendication 3, caractérisé par le fait qu'une électrode de mise à la terre (29) est disposée sur l'enveloppe du tambour (24), entre la deuxième électrode (27) et le point de déversement de la bande transporteuse (20), pour neutraliser la surface latérale en avant de l'emplacement d'alimentation.

5. Agencement selon la Revendication 4, caractérisé par le fait qu'un dispositif râcleur (28) servant à détacher les particules de matériau d'isolation collées à la surface d'enveloppe est disposé entre la deuxième électrode (27) et l'électrode de mise à la terre (29).

# Fig.1

0 006 826

Fig. 2